# EUROPÄISCHE PATENTSCHRIFT

(11) **EP 0 543 050 B1**
(45) Veröffentlichungstag und Bekanntmachung des Hinweises auf die Patenterteilung: **11.10.1995**
(21) Anmeldenummer: 91119933.9
(22) Anmeldetag: 22.11.1991
(51) Int. Cl.: B60N 2/24, B60N 3/06

(54) **Fahrgastsitz**
Passenger seat
Siège de passager

(43) Veröffentlichungstag der Anmeldung: 26.05.1993
(73) Patentinhaber: Ignaz Vogel GmbH & Co KG, Fahrzeugsitze, D-76228 Karlsruhe (DE)
(72) Erfinder: Vogel, Ignaz, W-7500 Karlsruhe 41-Stu. (DE)
(74) Vertreter: Trappenberg, Hans

(56) Entgegenhaltungen:
- EP-A- 0 236 847
- EP-A- 0 355 743
- US-A- 2 335 234
- US-A- 3 744 843

## Beschreibung

Die Erfindung betrifft einen auf einem Untergestell mit hintereinander angebrachten Einzel-Querträgern oder einer entsprechenden Querträgerplatte aufgebauten Komfort-Fahrgastsitz für Reihenbestuhlung mit einer im Fußraum bei der Unterseite der Rückenlehne angeordneten, höhenverstellbaren Fußstütze, gebildet aus einer Rastmechanik mit Schwenknebel, an dem eine Fußauflage verdrehbar angebracht ist.

Bekannte Fußstützen der beschriebenen Art werden allgemein so ausgeführt, daß entweder eine stabförmige, im Querschnitt runde Fußauflage zwischen zwei Schwenkhebeln unverdrehbar gehalten ist und mittels der Rastmechanik in die gewünschte Höhenlage gebracht werden kann, oder daß zwischen diesen beiden Schwenkhebeln eine um 360° verschwenkbare Platte angeordnet ist. In beiden Fällen beengen die beiden Schwenkhebel mit ihren Rastmechaniken, zusammen mit der eigentlichen Fußauflage, den sowieso sehr knapp bemessenen Fußraum unterhalb der Fahrgastsitze, und zwar gerade an den Stellen, an denen, bei Nichtbenutzen der Fußstütze, sich die Beine beziehungsweise Füße der dahintersitzenden Passagiere befinden. Um diesen Mangel weitgehend auszugleichen, wird daher des öfteren die Fußstütze nicht am Untergestell, sondern direkt an der Sitzplatte des Fahrgastsitzes angebracht, damit sie im hochgeklappten Zustand mit ihren Teilen möglichst weit oben im Fußraum zu liegen kommt und dadurch möglichst wenig diesen Fußraum einengt.

Bei einer neueren Konstruktion wird eine deutliche Verbesserung hinsichtlich der Fußraum-Verhältnisse dadurch erzielt, daS die Fußauflage an einem einzigen mittigen Schwenkhebel angebracht ist. Hierbei ist die Fußauflage je zur Hälfte beidseits des Schwenkhebels entweder wiederum ein im Querschnitt runder, feststehender Stab oder es sind zwei beidseits des Schwenkhebels verdrehbar angebrachte Auflageplatten. Nachteilig bei dieser Anordnung ist, daß die Füße auf den runden Fußauflagen keinen festen Halt finden, jedoch auch die verdrehbar angeordneten Fußauflageplatten durch ihre nicht begrenzte Drehbewegung keinen festen Halt geben.

Aus der US-A 3,744,843 ist ein Fahrgastsitz bekannt, welcher an seiner Rückseite eine Fußraste hat, welche als Fußauflage einen etwa oval geformten Hohlkörper hat, welcher zwischen zwei Schwenkhebeln angeordnet ist. Die Fußauflage kann mittels der Schwenkhebel in zwei Endstellungen verschwenkt werden, von denen eine die Fußauflage in Benutzungsstellung hält und die andere die Fußauflage in Ruhestellung hält.

Des weiteren weist die EP-A-0 355 743 eine Fußstütze mit einer in verschiedenen Stellungen einrastbaren Halterungen auf, an welcher ein kastenförmiger Träger angeordnet sein kann. Die Halterung kann aus einem einzigen Tragarm bestehen.

Die Erfindung bezweckt eine Verbesserung der letztgenannten Fußstütze mit einem einzigen Schwenkhebel dadurch, daß die Fußauflage eine Auflageplatte ist, gebildet aus einem kastenförmigen Hohlkörper mit durchgehender Oberseite, der mittels eines Bolzens begrenzt verdrehbar am Schwenkhebel angebracht ist, wobei die Begrenzung der Verdrehbewegung durch die Innenform des kastenförmigen Hohlkörpers (6), zusammen mit der Endgestaltung des Schwenkhebels (5) erfolgt.

Nicht mehr also wie bisher wird eine derartige Fußauflageplatte geteilt und beidseits des Schwenkhebels verdrehbar angebracht, sondern die Auflageplatte ist ein einziger kastenförmiger Hohlkörper, der nunmehr so am Schwenkhebel angebracht werden kann, daß sich, je nach der Stellung des Schwenkhebels, eine in ihrer Lage zur Fußstellung passende Auflagefläche bildet. Dadurch, daß die Verdrehbewegung begrenzt ist, besteht auch nicht mehr die Unsicherheit hinsichtlich dieser Auflagefläche wie bei den unbegrenzt verdrehbaren, bekannten Auflageflächen. Zur sicheren Abstützung trägt auch einem weiteren Erfindungsmerkmal nach bei, daß der kastenförmige Hohlkörper aus einem hartelastischen (Elastizitätsmodul ∼1000 kg/cm²), abriebfesten Kunststoff, vorzugsweise aus einem vernetzten Polyurethan, ist. Zur sicheren Fußauflage trägt auch bei, daß die Plattenoberseite mit zu den Enden hin verlaufenden Längsrillen versehen ist. Dadurch, daß die Längsrillen zu den Stirnseiten der Auflageplatte verlaufen, ist eine einfache Reinigung dieser Rillen möglich.

Die Festigkeit des kastenförmigen Hohlkörpers wird nach der Erfindung durch versteifende Querrippen erreicht.

Die gewünschte Verdrehbegrenzung ergibt sich nach der Erfindung dadurch, daß die Endflächen des Schwenkhebels als Verdrehbegrenzung für die Auflageplatte ausgebildet sind und diese Verdrehung, dadurch daß die Endflächen in einem Winkel von eta 135° zueinander liegen, auf etwa 45° begrenzen.

Da nunmehr nur noch ein Schwenkhebel verwendet wird und durch die Begrenzung der Verdrehbewegung der Auflageplatte dafür gesorgt ist, daß der Schwenkhebel und die Auflageplatte sich dicht an die Unterseite des Fahrgastsitzes anlegen, kann nunmehr auch die Rastmechanik äußerst stabil an dem hinteren Querträger des Untergestells angebracht sein.

Insgesamt ergibt sich damit eine Fußstütze, die äußerst stabil ist und auch stabil an dem Untergestell des Fahrgastsitzes anzubringen ist, die auch darüber hinaus eine große Auflagefläche für die abzustützenden Füße ergibt, die zudem stets im richtigen Winkel zu der Abstützung suchenden Fußunterseite liegt.

Auf der Zeichnung ist ein Ausführungsbeispiel schematisch dargestellt, und zwar zeigen:
- Fig. 1: eine Draufsicht auf die Auflageplatte
und
- Fig. 2: eine Seitenansicht der Fußstütze in verschiedenen Stellungen.

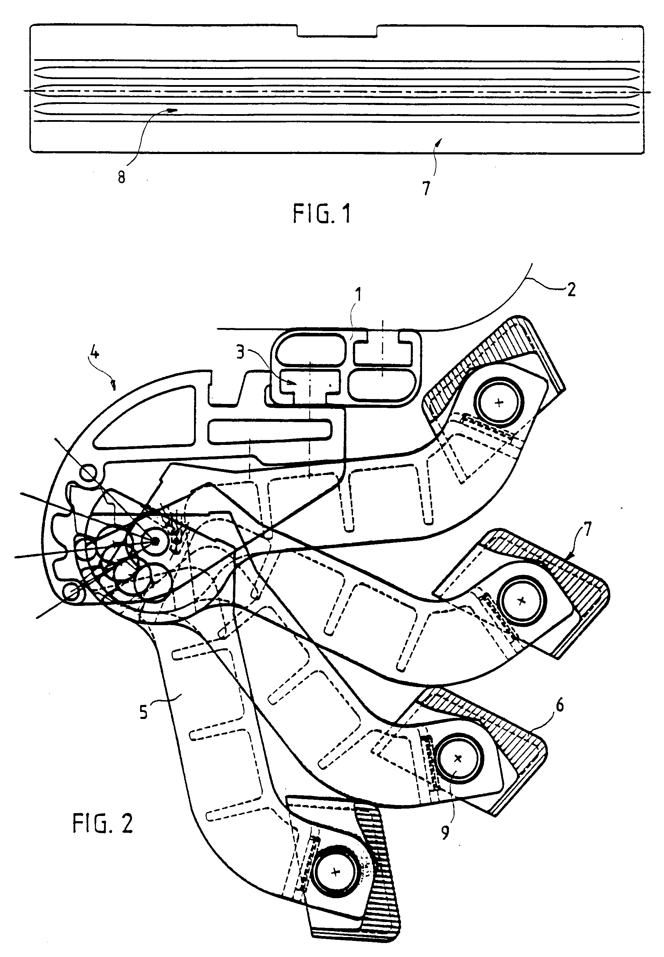

Am hinteren Querträger (1) eines Fahrgastsitz-Untergestells, auf dem ein Sitz (2) montiert ist, ist in einer Hammerkopfnut (3) des Querträgers (1) eine Rastmechanik (4) befestigt. Durch die Befestigung an der Hammerkopfnut ist eine jeweils gewünschte Fixierung bei unterschiedlich breiten Fahrgastsitzen möglich, so daß die Fußstütze jeweils mittig unter den Fahrgastsitzen (2) angebracht werden kann. Aus der Rastmechanik (4) steht ein Schwenkhebel (5) vor, der endständig einen kastenförmigen Hohlkörper (6) trägt. Dieser kastenförmige Hohlkörper (6) dient an seiner Oberseite als Auflageplatte (7), wobei diese Auflageplatte (7) eine breite und sichere Auflage für beide Füße eines Passagiers ergibt. Die Auflageplatte (7) ist zudem mit Rillen (8) versehen, die zu den Stirnkanten der Auflageplatte (7) beziehungsweise des kastenförmigen Hohlkörpers (6) hin, wie aus Fig. 1 ersichtlich, verlaufen. Der kastenförmige Hohlkörper (6) ist mittels eines Achsbolzens (9) an dem Schwenkhebel (5) begrenzt verdrehbar gehalten, wobei die Begrenzung der Verdrehbewegung durch die Innenform des kastenförmigen Hohlkörpers (6), zusammen mit der Endgestaltung des Schwenkhebels (5) erfolgt. Durch diese Gestaltung ist eine Verschwenkung des kastenförmigen Hohlkörpers (6) um etwa 45° möglich, so daß sich der Passagier, je nach der gewünschten Höhenlage des Schwenkhebels, die Auflageplatte (7) in der ihm bequemsten Winkellage einstellen kann.

## Patentansprüche

1. Auf einem Untergestell mit hintereinander angebrachten Einzel-Querträgern oder einer entsprechenden Querträgerplatte aufgebauter Komfort-Fahrgastsitz für Reihenbestuhlung mit einer im Fußraum bei der Unterseite der Rückenlehne angeordneten, höhenverstellbaren Fußstütze, gebildet aus einem einzigen mittigen Schwenkhebel, an dem an einem Ende eine Fußauflage verdrehbar angebracht ist und an dessen anderen Ende eine Rastmechanik angebracht ist, die an dem Sitzuntergestell befestigt ist,
dadurch gekennzeichnet,
daß die Fußauflage eine Auflageplatte (7) ist, gebildet aus einem kastenförmigen Hohlkörper (6) mit durchgehender Oberseite, der mittels eines Achsbolzens (9) begrenzt verdrehbar am Schwenkhebel (5) angebracht ist, wobei die Begrenzung der Verdrehbewegung durch die Innenform des kastenförmigen Hohlkörpers (6) zusammen mit der Endgestaltung des Schwenkhebels (5) erfolgt.

2. Fahrgastsitz nach Anspruch 1,
dadurch gekennzeichnet,
daß der kastenförmige Hohlkörper (6) durch Querrippen versteift ist.

3. Fahrgastsitz nach Anspruch 1 oder 2,
dadurch gekennzeichnet,
daß der kastenförmige Hohlkörper (6) aus einem hartelastischen (Elastizitätsmodul ∼1000 kg/cm²), abriebfesten Kunststoff, vorzugsweise aus einem vernetzten Polyurethan ist.

4. Fahrgastsitz nach Anspruch 1,
dadurch gekennzeichnet,
daß die Plattenoberseite mit zu den Enden hin verlaufenden Längsrillen (8) versehen ist.

5. Fahrgastsitz nach Anspruch 1,
dadurch gekennzeichnet,
daß die Endflächen des Schwenkhebels (5) als Verdrehbegrenzung für die Auflageplatte ausgebildet sind.

6. Fahrgastsitz nach Anspruch 5,
dadurch gekennzeichnet,
daß die Endflächen in einem Winkel von etwa 135° zueinander liegen.

7. Fahrgastsitz nach Anspruch 1,
dadurch gekennzeichnet,
daß die Rastmechanik (4) an dem hinteren Querträger (1) angebracht ist.

## Claims

1. A luxury passenger seat for seating in a row, which is mounted on a support structure with individual transverse carriers disposed one behind the other or on a corresponding transverse carrier plate, with a foot rest which is arranged in the foot room at the underside of the back rest and which is adjustable in respect of height, formed from a single central pivot lever on which a foot support is rotatably mounted at one end and at whose other end is mounted a retaining mechanism which is fixed to the seat support structure, characterised in that the foot support is a support plate (7), formed from a box-like hollow body (7) with continuous top side, which is mounted for limited rotary movement on the pivot lever (5) by means of a pivot pin (9), wherein the limitation on the rotary movement is effected by virtue of the internal shape of the box-like hollow body (6) together with the end configuration of the pivot lever (5).

2. A passenger seat according to claim 1 characterised in that the box-like hollow body (6) is stiffened by transverse ribs.

3. A passenger seat according to claim 1 or claim 2 characterised in that the box-like hollow body (6) is of a hard-elastic (modulus of elasticity - 1000 kg/cm²), wear-resistant plastics material, preferably a cross-linked polyurethane.

4. A passenger seat according to claim 1 characterised in that the top side of the plate is provided with longitudinal grooves (8) which extend towards the ends.

5. A passenger seat according to claim 1 characterised in that the end surfaces of the pivot lever (5) are formed as rotary movement-limiting means for the support plate.

6. A passenger seat according to claim 5 characterised in that the end surfaces are at an angle of about 135° relative to each other.

7. A passenger seat according to claim 1 characterised in that the retaining mechanism (4) is mounted to the rear transverse carrier (1).

## Revendications

1. Siège de passager de confort pour équiper des rangées de sièges, construit sur une infrastructure avec des traverses individuelles posées les unes à la suite des autres ou une plaque porteuse transversale correspondante, le siège étant pourvu d'un repose-pieds réglable en hauteur, disposé dans l'espace pour les pieds sur le dessous du dossier et constitué d'un seul lever pivotant central à une extrémité duquel est monté à rotation un appui-pieds et à l'autre extrémité duquel est monté un mécanisme de blocage qui est fixé sur l'infrastructure du siège,
**caractérisé** en ce que l'appui-pieds est une plaque d'appui (7), constituée d'un corps creux (6) en forme de caisson présentant une face supérieure ininterrompue et monté avec une possibilité limitée de rotation sur le levier pivotant (5) au moyen d'un pivot (9), la limitation du mouvement de rotation s'effectuant par la forme intérieure du corps creux en caisson (6) conjointement avec la configuration terminale du levier pivotant (5).

2. Siège de passager selon la revendication 1, **caractérisé** en ce que le corps creux (6) en forme de caisson est renforcé par des nervures transversales.

3. Siège de passager selon la revendication 1 ou 2, **caractérisé** en ce que le corps creux (6) en forme de caisson est réalisé en matière plastique élastique dure (module d'élasticité -1000 kg/cm²), résistante à l'usure par frottement, de préférence en polyuréthane réticulé.

4. Siège de passager selon la revendication 1, **caractérisé** en ce que la face supérieure de la plaque est pourvue de cannelures longitudinales (8) s'étendant vers les extrémités.

5. Siège de passager selon la revendication 1, **caractérisé** en ce que les faces terminales du lever pivotant (5) sont configurées comme moyen pour limiter la rotation de la plaque d'appui.

6. Siège de passager selon la revendication 5, **caractérisé** en ce que les faces terminales se situent sous un angle d'environ 135° l'une par rapport à l'autre.

7. Siège de passager selon la revendication 1, **caractérisé** en ce que le mécanisme de blocage (4) est monté sur la traverse arrière (1).
